# DEMANDE DE BREVET EUROPEEN

(11) **EP 3 316 155 A1**
(43) Date de publication de la demande: **02.05.2018**
(21) Numéro de dépôt: 17198283.8
(22) Date de dépôt: 25.10.2017
(51) Int. Cl.: G06F 17/50, B61B 12/02

(54) **PROCÉDÉ D'OPTIMISATION D'UN PROFIL DE ROUES D'UN VÉHICULE FERROVIAIRE**

(30) Priorité: 27.10.2016 FR 1660449
(71) Demandeur: ALSTOM Transport Technologies, 93400 Saint-Ouen (FR)
(72) Inventeur: ALBON, Adrien, 17000 LA ROCHELLE (FR)
(74) Mandataire: Lavoix

(57) **Abrégé**

Le procédé comporte : une étape d'élaboration d'un modèle informatique de la voie ferrée complète ; une étape d'élaboration d'un modèle informatique du véhicule ferroviaire destiné à porter les roues (20) et à circuler sur la voie ferrée, précisant une raideur de suspensions de ce véhicule ferroviaire, une architecture du véhicule ferroviaire, et des masses du véhicule ferroviaire ; une étape de simulation de la circulation du véhicule ferroviaire sur la voie ferrée, avec une vitesse variant le long de la voie ferrée conformément à des conditions d'exploitation réelles ; une étape d'évaluation de valeurs qualifiant la qualité de marche, comprenant une valeur de stabilité, une valeur de sécurité, une valeur de confort et une valeur d'usure de la roue et ; une étape d'optimisation du profil de roue (20) par algorithme génétique en fonction des valeurs de qualité de marche évaluées, en comparaison avec des valeurs optimales prédéfinies.

## Description

La présente invention concerne un procédé d'optimisation d'un profil de roues d'un véhicule ferroviaire destiné à circuler sur une voie ferrée prédéfinie.

Habituellement, les roues d'un véhicule ferroviaire sont standard pour ce type de véhicule ferroviaire. Ainsi, une grande majorité de véhicules ferroviaires d'un même type présentent un même profil de roue, alors qu'ils circulent sur des réseaux différents, si bien que leurs roues ne sont pas soumises aux mêmes sollicitations.

Il est donc très difficile d'optimiser le profil de roues choisi pour un type de véhicule ferroviaire, pour répondre à la fois à des critères de confort, de sécurité, de stabilité et de résistance à l'usure.

On connaît déjà, dans l'état de la technique, notamment d'après CN 104036089, un procédé d'optimisation d'un profil de roue. Toutefois, ce procédé ne permet que d'optimiser la résistance à l'usure de cette roue.

Habituellement, il est alors nécessaire de faire un choix entre optimiser le critère de sécurité, optimiser le critère de confort, ou optimiser le critère de stabilité et de résistance à l'usure.

L'invention a notamment pour but d'améliorer la situation, en proposant un procédé d'optimisation de profil de roue, permettant d'optimiser plusieurs critères parmi ceux évoqués ci-dessus.

A cet effet, l'invention a notamment pour objet un procédé d'optimisation d'un profil de roues d'un véhicule ferroviaire destiné à circuler sur une voie ferrée prédéfinie, caractérisé en ce qu'il comporte :
- une étape d'élaboration d'un modèle informatique de la voie ferrée complète, précisant la forme de la voie ferrée, l'usure de la voie ferrée et un profil de rail de cette voie ferrée,
- une étape d'élaboration d'un modèle informatique du véhicule ferroviaire destiné à porter les roues et à circuler sur la voie ferrée, précisant une raideur de suspensions de ce véhicule ferroviaire, une architecture du véhicule ferroviaire, et des masses du véhicule ferroviaire,
- une étape de simulation de la circulation du véhicule ferroviaire sur la voie ferrée, avec une vitesse variant le long de la voie ferrée conformément à des conditions d'exploitation réelles,
- une étape d'évaluation, suite à l'étape de simulation, de valeurs qualifiant la qualité de marche, comprenant une valeur de stabilité, une valeur de sécurité, une valeur de confort et une valeur d'usure de la roue,
- une étape d'optimisation du profil de roue par algorithme génétique en fonction des valeurs de qualité de marche évaluées, en comparaison avec des valeurs optimales prédéfinies.

L'invention prévoit donc d'optimiser le profil de roue en fonction de la voie ferrée et en fonction du véhicule. Ainsi, un profil de roue optimisé peut être associé à chaque couple de voie ferrée et de véhicule. Cela permet de surmonter l'impossibilité d'optimiser un profil de roue à toutes les voies ferrées sur lesquelles circule un type de véhicule.

L'invention surmonte donc l'idée reçue consistant à associer un même profil de roue à un type de véhicule, quelles que soient les voies ferrées sur lesquelles circulent des véhicules de ce type.

Un procédé d'optimisation selon l'invention peut comporter en outre l'une ou plusieurs des caractéristiques suivantes, prises seules ou selon toutes combinaisons techniquement envisageables.
- Le profil de roue étant défini par un jeu de paramètres (γ_{f}, γₜ, r₀, Aᵣ, SR, Sd, Sh, qR), le procédé comporte des campagnes d'optimisation du jeu de paramètres (γ_{f}, γₜ, r₀, Aᵣ, SR, Sd, Sh, qR), chaque campagne d'optimisation comprenant les étapes de simulation, d'évaluation et d'optimisation, telles que :
   - au cours de la première campagne d'optimisation, des premiers jeux de paramètres de réglage sont prédéfinis, les étapes de simulation et d'évaluation étant effectuées pour chaque premier jeu de paramètres, puis l'algorithme génétique est appliqué pour déterminer des seconds jeux de paramètres,
   - au cours de chaque campagne d'optimisation suivante, les étapes de simulation et d'évaluation sont effectuées avec chacun des jeux de paramètres de réglage déterminés par la campagne d'optimisation précédente, puis l'algorithme génétique est appliqué pour déterminer de nouveaux jeux de paramètres de réglage.
- Le premier jeu de paramètres est déterminé aléatoirement.
- Le premier jeu de paramètres est déterminé dans des intervalles prédéfinis.
- L'algorithme génétique réalise les étapes suivantes :
   - sélection des jeux de paramètres générant les meilleurs résultats,
   - croisement des paramètres des meilleurs jeux de paramètres,
   - mutation aléatoire de certains paramètres.
- Le profil de roue est défini par un jeu de paramètres (γ_{f}, γₜ, r₀,, SR, Sd, Sh, qR) comprenant : un angle de rebord (γ_{f}), un angle de bande de roulement (γₜ), un écartement (Aᵣ) entre deux roues d'un même essieu, un écartement extérieur des rebords (SR), une largeur de rebord (Sd), une hauteur de rebord (Sh), et/ou une mesure de rebord (qR).

L'invention concerne également une roue de véhicule ferroviaire, caractérisée en ce qu'elle présente un profil optimisé au moyen du procédé d'optimisation tel que défini précédemment.

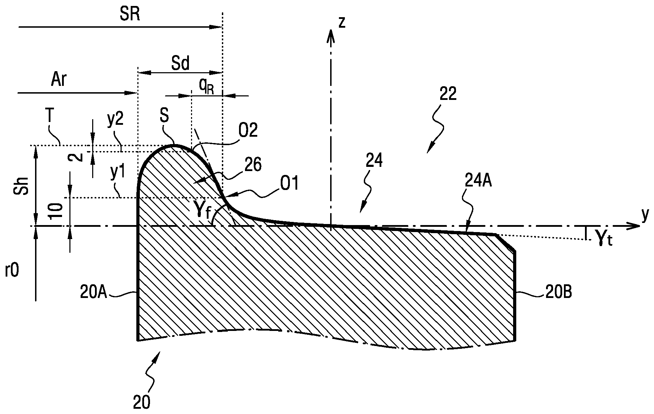

L'invention sera mieux comprise à la lecture de la description qui va suivre, donnée uniquement à titre d'exemple et faite en se référant à la figure unique annexée, représentant schématiquement, en coupe, un profil de roue de véhicule ferroviaire, optimisée par un procédé d'optimisation selon un exemple de mode de réalisation de l'invention.

On a représenté partiellement sur la figure une roue 20 destinée à équiper un véhicule ferroviaire, lui-même destiné à circuler sur une voie ferrée prédéfinie. La roue 20 est représentée dans un plan de coupe.

De manière classique, seule une partie de roulement 22 de la roue 20 est représentée. Cette partie de roulement 22 est destinée à coopérer avec un rail de la voie ferrée.

La roue 20 présente une surface intérieure 20A, destinées à être tournée vers l'intérieur du véhicule ferroviaire, et une surface extérieure 20B opposée à la surface intérieure 20A. Lorsque deux roues 20 sont montées sur un essieu, leurs surfaces intérieures 20A sont agencées l'une en regard de l'autre.

La partie de roulement 22 comporte, de manière classique, une bande de roulement 24 et un rebord 26 s'élevant en saillie depuis la bande de roulement 24. Le rebord 26 est agencé du côté de la surface intérieure 20A de la roue 20, c'est-à-dire destiné à être tourné vers l'intérieur du véhicule ferroviaire.

La partie de roulement 22 s'étend de manière classique sur toute la périphérie de la roue 20, autour d'un axe de la roue 20.

On définit par ailleurs, de manière classique, un plan de définition z, vertical, perpendiculaire à l'axe de la roue 20, et situé au milieu de la roue 20 dans la direction de l'axe de la roue 20.

On définit également, de manière classique, un axe transversal y, perpendiculaire au plan de définition z, passant par l'intersection entre le plan de définition z et la bande de roulement 24.

Le profil de la roue 20 est défini par un jeu de paramètres connu en soi, qui va maintenant être détaillé.

Tout d'abord, on définit sur le rebord 26 un point O1, intersection entre, d'une part, une droite y1 parallèle à l'axe transversal y et espacé de 10mm de cet axe transversal y, et d'autre part, la surface du rebord 26 du côté de la surface extérieure 20B de la roue 20.

On définit également, sur ce rebord 26, un sommet S, qui est le point du rebord 26 le plus éloigné de l'axe transversal y dans le plan de coupe.

On définit également, sur le rebord 26, un point 02, intersection entre, d'une part, une droite y2 parallèle à une tangente T passant par le sommet S et espacé de 2mm de cette tangente T, et d'autre part, la surface du rebord 26 du côté de la surface extérieure 20B de la roue 20.

Les définitions de ces points O1 et O2 sont usuellement utilisée dans l'état de la technique.

Les paramètres du jeu de paramètres sont les suivants.

γ_{f} est l'angle du rebord (« Angle of flange » en anglais) : il s'agit de l'angle formé entre une tangente au rebord 26 au point O1, et l'axe transversal y.

γₜ est l'angle de la bande de roulement (« Angle of tread » en anglais) : il s'agit de l'angle formé entre une partie 24A de la bande de roulement 24 partant du plan de définition z vers la surface extérieure 20B, et l'axe transversal y.

r₀ est le rayon nominal de la roue (« Nominal rolling radius » en anglais) : il s'agit de la distance, dans le plan de coupe, entre l'axe de la roue et l'axe transversal y.

Aᵣ est l'écartement entre les roues de l'essieu (« Distance of the inner wheel rim flanges » en anglais) : il s'agit de la distance entre les surfaces intérieures 20A des roues 20 portées par un même essieu.

SR est l'écartement extérieur des rebords (« Gauge of wheelset » en anglais) : il s'agit de la distance, dans une direction parallèle à l'axe transversal y, entre les points O1 des roues 20 portées par un même essieu.

Sd est la largeur du rebord (« Width of Flange » en anglais) : il s'agit de la distance, dans une direction parallèle à l'axe transversal y, entre la surface intérieure 20A et le point O1.

Sh est la hauteur du rebord (« Height of Flange » en anglais) : il s'agit de la distance, dans le plan de coupe et parallèlement au plan de définition z, entre l'axe transversal y et le sommet S du rebord 26.

qR est la mesure de rebord (« Measure of Flange » en anglais) : il s'agit de la distance, dans une direction parallèle à l'axe transversal y, entre les points O1 et O2.

Tous ces paramètres sont usuellement utilisés dans la technique relative à la définition de profil de roue de véhicule ferroviaire.

La présente invention vise à optimiser ces paramètres pour optimiser des critères de sécurité, de confort, de stabilité et de résistance à l'usure.

Le critère de sécurité vise notamment à limiter les risques de déraillement, conformément à la norme EN14363.

Le critère de stabilité vise à limiter les accélérations latérales au niveau du plancher du véhicule ferroviaire, suite à un défaut ponctuel sur la voie. Par exemple, les accélérations latérales au niveau du plancher ne doivent pas dépasser 0,4 m/s², 10 secondes après le défaut.

Le critère de confort vise à limiter les diverses accélérations dans une salle voyageurs du véhicule ferroviaire, notamment les accélérations dues à des défauts de la voie.

Le critère de résistance à l'usure est préalablement choisi, en considérant la durée de vie souhaitée pour la roue 20.

Le procédé d'optimisation comporte tout d'abord une étape d'élaboration d'un modèle informatique de la voie ferrée complète, précisant la forme de la voie ferrée, l'usure de la voie ferrée et un profil de rail de cette voie ferrée.

La forme de la voie ferrée concerne notamment les lignes droites, les courbes, les montées et les pentes. Ainsi, la forme de la voie est connue préalablement à la conception de la roue 20.

Le profil de rail comporte notamment la forme précise du rail avec lequel la roue 20 est destinée à coopérer, et l'écartement entre les rails de la voie ferrée.

Le procédé d'optimisation comporte ensuite une étape d'élaboration d'un modèle informatique du véhicule ferroviaire destiné à porter les roues 20 et à circuler sur la voie ferrée, précisant une raideur de suspensions de ce véhicule ferroviaire, une architecture du véhicule ferroviaire, et les masses (et la répartition de ces masses) du véhicule ferroviaire.

Le procédé d'optimisation comporte ensuite une étape de simulation de la circulation du véhicule ferroviaire sur la voie ferrée, avec une vitesse variant le long de la voie ferrée conformément à des conditions d'exploitation réelles. On notera que les masses du véhicule ferroviaire correspondent également à des conditions d'exploitation réelles, prenant donc en compte les masses de passagers présents dans le véhicule.

Le procédé d'optimisation comporte ensuite une étape d'évaluation, de valeurs qualifiant la qualité de marche, comprenant une valeur de stabilité, une valeur de sécurité, une valeur de confort et une valeur d'usure de la roue, conformément aux critères évoqués précédemment.

Le procédé d'optimisation comporte enfin une étape d'optimisation du profil de roue par algorithme génétique en fonction des valeurs de qualité de marche évaluées, en comparaison avec des valeurs optimales prédéfinies.

Le principe général d'un algorithme génétique est connu en soi. Partant d'une population initiale, on effectue une évaluation des individus, puis on effectue une optimisation par sélection, croisements et mutations, pour obtenir une nouvelle population optimisée. On effectue ensuite une nouvelle itération à partir de l'évaluation des individus.

Avantageusement, le procédé comporte des campagnes d'optimisation du jeu de paramètres définissant le profil de roue, chaque campagne d'optimisation comprenant les étapes de simulation, d'évaluation et d'optimisation.

Au cours de la première campagne d'optimisation, des premiers jeux de paramètres de réglage sont prédéfinis, afin de définir des premiers profils de roues. Les étapes de simulation et d'évaluation étant effectuées pour chaque premier jeu de paramètres (c'est-à-dire pour des véhicules équipés de roues présentant pour chaque véhicule un premier profil de roues respectif), puis l'algorithme génétique est appliqué pour déterminer des seconds jeux de paramètres.

Avantageusement, les premiers jeux de paramètres sont déterminés aléatoirement. Par exemple, les premiers jeux de paramètres sont déterminés dans des intervalles prédéfinis. L'homme du métier saura déterminer ces intervalles prédéfinis, en fonction des dimensions extrêmes que peut présenter le profil de roue.

En variante, les premiers jeux de paramètres sont déterminés arbitrairement.

Au cours de chaque campagne d'optimisation suivante, les étapes de simulation et d'évaluation sont effectuées avec chacun des jeux de paramètres de réglage déterminés par la campagne d'optimisation précédente, puis l'algorithme génétique est appliqué pour déterminer de nouveaux jeux de paramètres de réglage.

Ainsi, l'algorithme génétique réalise les étapes suivantes :
- sélection des jeux de paramètres générant les meilleurs résultats,
- croisement des paramètres des meilleurs jeux de paramètres,
- mutation aléatoire de certains paramètres.

Il est à noter que les paramètres de réglage ne peuvent pas être déduits par un simple calcul en fonction de variables d'entrée, un tel calcul étant trop complexe étant donné la grande variété de variables d'entrée.

L'invention prévoit donc de déterminer les paramètres de réglage optimisés en réalisant des campagnes d'optimisation, en déterminant les paramètres de réglage utilisés à chaque campagne au moyen d'un algorithme génétique.

On appelle ici « campagne d'optimisation », l'accumulation suffisante de données relativement à des jeux de paramètres du profil de roue, au cours des étapes de simulation et d'évaluation. Cette accumulation de données permet à l'algorithme de déduire des jeux de paramètres théoriquement plus favorables, jeux qui seront évalués lors de la campagne suivante.

En itérant les campagnes d'optimisation un nombre suffisant de fois, les paramètres de réglage convergent vers des valeurs optimales.

Il apparaît clairement que l'invention, en utilisant un algorithme génétique, permet de réaliser des optimisations multi-critères dynamiques. Ainsi, un jeu de paramètres proches d'un optimum sera toujours proposé, notamment grâce au mécanisme de « mutation » inclus dans le principe général connu d'optimisation par algorithme génétique.

On notera que l'invention n'est pas limitée au mode de réalisation précédemment décrit, mais pourrait présenter diverses variantes.

## Revendications

1. Procédé d'optimisation d'un profil de roues (20) d'un véhicule ferroviaire destiné à circuler sur une voie ferrée prédéfinie, **caractérisé en ce qu'**il comporte :
- une étape d'élaboration d'un modèle informatique de la voie ferrée complète, précisant la forme de la voie ferrée, l'usure de la voie ferrée et un profil de rail de cette voie ferrée,
- une étape d'élaboration d'un modèle informatique du véhicule ferroviaire destiné à porter les roues (20) et à circuler sur la voie ferrée, précisant une raideur de suspensions de ce véhicule ferroviaire, une architecture du véhicule ferroviaire, et des masses du véhicule ferroviaire,
- une étape de simulation de la circulation du véhicule ferroviaire sur la voie ferrée, avec une vitesse variant le long de la voie ferrée conformément à des conditions d'exploitation réelles,
- une étape d'évaluation, suite à l'étape de simulation, de valeurs qualifiant la qualité de marche, comprenant une valeur de stabilité, une valeur de sécurité, une valeur de confort et une valeur d'usure de la roue,
- une étape d'optimisation du profil de roue (20) par algorithme génétique en fonction des valeurs de qualité de marche évaluées, en comparaison avec des valeurs optimales prédéfinies.

2. Procédé d'optimisation selon la revendication 1, dans lequel, le profil de roue (20) étant défini par un jeu de paramètres (γ_{f}, γₜ, r₀, Aᵣ, SR, Sd, Sh, qR), le procédé comporte des campagnes d'optimisation du jeu de paramètres (γ_{f}, γₜ, r₀, Aᵣ, SR, Sd, Sh, qR), chaque campagne d'optimisation comprenant les étapes de simulation, d'évaluation et d'optimisation, telles que :
• au cours de la première campagne d'optimisation, des premiers jeux de paramètres de réglage sont prédéfinis, les étapes de simulation et d'évaluation étant effectuées pour chaque premier jeu de paramètres, puis l'algorithme génétique est appliqué pour déterminer des seconds jeux de paramètres,
• au cours de chaque campagne d'optimisation suivante, les étapes de simulation et d'évaluation sont effectuées avec chacun des jeux de paramètres de réglage déterminés par la campagne d'optimisation précédente, puis l'algorithme génétique est appliqué pour déterminer de nouveaux jeux de paramètres de réglage.

3. Procédé d'optimisation selon la revendication 2, dans lequel le premier jeu de paramètres est déterminé aléatoirement.

4. Procédé d'optimisation selon la revendication 2 ou 3, dans lequel le premier jeu de paramètres est déterminé dans des intervalles prédéfinis.

5. Procédé d'optimisation selon l'une quelconque des revendications 2 à 4, dans lequel l'algorithme génétique réalise les étapes suivantes :
- sélection des jeux de paramètres générant les meilleurs résultats,
- croisement des paramètres des meilleurs jeux de paramètres,
- mutation aléatoire de certains paramètres.

6. Procédé d'optimisation selon l'une quelconque des revendications précédentes, dans lequel le profil de roue est défini par un jeu de paramètres (γ_{f}, γₜ, r₀,, SR, Sd, Sh, qR) comprenant : un angle de rebord (γ_{f}), un angle de bande de roulement (γₜ), un écartement (Aᵣ) entre deux roues d'un même essieu, un écartement extérieur des rebords (SR), une largeur de rebord (Sd), une hauteur de rebord (Sh), et/ou une mesure de rebord (qR).

7. Roue (20) de véhicule ferroviaire, **caractérisée en ce qu'**elle présente un profil optimisé au moyen du procédé d'optimisation selon l'une quelconque des revendications précédentes.
